(19) Europäisches Patentamt
European Patent Office
Office européen des brevets

(11) **EP 4 424 774 A1**

(12) **EUROPEAN PATENT APPLICATION**
published in accordance with Art. 153(4) EPC

(43) Date of publication:
**04.09.2024 Bulletin 2024/36**

(21) Application number: **22886636.4**

(22) Date of filing: **06.10.2022**

(51) International Patent Classification (IPC):
**C08L 77/00** (2006.01)    **C08J 5/04** (2006.01)
**C08K 3/04** (2006.01)    **C08K 3/08** (2006.01)
**C08K 7/04** (2006.01)    **C08L 63/00** (2006.01)
**C08L 93/00** (2006.01)

(52) Cooperative Patent Classification (CPC):
**C08J 5/04; C08K 3/04; C08K 3/08; C08K 7/04;
C08L 63/00; C08L 77/00; C08L 93/00**

(86) International application number:
**PCT/JP2022/037398**

(87) International publication number:
**WO 2023/074305 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.10.2021 JP 2021175181**

(71) Applicant: **Toray Industries, Inc.
Tokyo 103-8666 (JP)**

(72) Inventors:
• **HIRATA, Shin
Nagoya-shi, Aichi 455-8502 (JP)**
• **HAMAGUCHI, Mitsushige
Nagoya-shi, Aichi 455-8502 (JP)**

(74) Representative: **Mewburn Ellis LLP
Aurora Building
Counterslip
Bristol BS1 6BX (GB)**

(54) **FIBER-REINFORCED THERMOPLASTIC RESIN MOLDED ARTICLE**

(57) The main object of the present invention is to provide a fiber reinforced thermoplastic resin molded article that has good mechanical characteristics, particularly in terms of bending elastic modulus, appearance quality, and in particular warpage suppression property. A fiber reinforced thermoplastic resin molded article comprising a reinforcing fiber (A) having a weight average fiber length of 0.4 mm or more and 1.5 mm or less and a thermal conductivity in the fiber axis direction of 5 W/mK or more, a polyamide resin (B) with a melting point of 210°C or less used as matrix resin, and a modifying agent (C), wherein the reinforcing fibers (A) accounts for 10 parts by mass or more and 30 parts by mass or less, the polyamide resin (B) accounting for 60 parts by mass or more and 89 parts by mass or less, and the modifying agent (C) accounting for 1 part by mass or more and to 10 parts by mass or less, with the components (A) to (C) altogether accounting for 100 parts by mass.

**Description**

TECHNICAL FIELD

The present invention relates to a fiber reinforced thermoplastic resin molded article that includes a reinforcing fiber and a polyamide resin with a low melting point.

BACKGROUND ART

Being lightweight and having excellent mechanical characteristics, molded articles composed mainly of reinforcing fibers and thermoplastic resins have been widely used in sports goods, aerospace applications, and general industrial applications. The reinforcing fibers that are generally used include inorganic fibers such as metal fibers including aluminum fiber and stainless steel fiber as well as silicon carbide fiber and carbon fiber, and organic fibers such as aramid fiber and polyparaphenylene benzoxazole (PBO) fiber. From the viewpoint of the balance among specific strength, specific rigidity, and lightness, the use of carbon fiber is favorable, and in particular, the use of polyacrylonitrile (PAN) based carbon fiber is adopted favorably.

Reinforcing fibers can work very effectively for reinforcement when combined with thermoplastic resins, but for realizing even better effects, it is necessary to disperse the reinforcing fibers uniformly in the thermoplastic resin molded articles. If the dispersion of reinforcing fibers is uneven, that is, if part of the reinforcing fibers are left in the form of fiber bundles in a molded article, they can cause a decrease in tensile strength and a decline in impact resistance. Therefore, if they are used in structural components that require high strength, they can lead to an insufficient reinforcing effect, potentially causing breakage in actual use. Furthermore, if reinforcing fibers are dispersed unevenly in a molded article, surface irregularities are likely to occur to cause a decline in its appearance quality. Thus, there are demands for fiber reinforced thermoplastic resin molded articles that have excellent mechanical characteristics, appearance quality, dimensional accuracy, and in particular warpage suppression property.

As a means of producing a fiber reinforced fiber thermoplastic resin molded article that has enhanced mechanical characteristics and appearance quality, a good method proposed so far is, for example, to use a combination of a reinforcing fiber and a polyamide resin that contains an aromatic ring with a polyamide resin that contains no aromatic ring (for example, Patent document 1).

To produce a molded article that has enhanced appearance quality, a method has been proposed that uses a combination of a reinforcing fiber and a thermoplastic resin adopted as matrix resin therefor along with a thermoplastic polymer that has a lower melt viscosity than the thermoplastic resin (for example, see Patent document 2).

In addition, as a means of producing a fiber reinforced thermoplastic resin molded article that has enhanced mechanical characteristics and high flexibility, a good method has been proposed in which a polyamide resin with a low melting point is used as the thermoplastic resin (for example, Patent documents 3 and 4).

PRIOR ART DOCUMENTS

PATENT DOCUMENTS

Patent document 1: International Publication WO 2013/077238
Patent document 2: Japanese Unexamined Patent Publication (Kokai) No. HEI 10-138379
Patent document 3: Japanese Unexamined Patent Publication (Kokai) No. 2020-049240
Patent document 4: Japanese Unexamined Patent Publication (Kokai) No. 2020-111677

SUMMARY OF INVENTION

PROBLEMS TO BE SOLVED BY THE INVENTION

In the case of the molded articles produced by the techniques proposed in Patent documents 1 to 4, particularly for fiber reinforced thermoplastic resin molded articles that include a thermoplastic resin as matrix, such techniques have not been successful in producing fiber reinforced thermoplastic resin molded articles that have good mechanical characteristics, particularly in terms of bending elastic modulus, good appearance quality, high dimensional accuracy, and in particular warpage suppression property, and there has been a call for the development of such a fiber reinforced thermoplastic resin composition.

In view of the problems with these conventional techniques, the present invention aims to provide fiber reinforced thermoplastic resin molded articles that have good mechanical characteristics, particularly in terms of bending elastic modulus, appearance quality, dimensional accuracy, and in particular warpage suppression property.

MEANS OF SOLVING THE PROBLEMS

The present invention adopts the following constitution to solve the problems described above.

(1) A fiber reinforced thermoplastic resin molded article including a reinforcing fiber (A) having a weight average fiber length of 0.4 mm or more and 1.5 mm or less and a thermal conductivity in the fiber axis direction of 5 W/mK or more, a polyamide resin (B) with a melting point of 210°C or less used as matrix resin, and a modifying agent (C), wherein the reinforcing fibers (A) accounts for 10 parts by mass or more and 30 parts by mass or less, the polyamide resin (B) accounting for 60 parts by mass or more and 89 parts by mass or less, and the modifying agent (C) accounting for 1 part by mass or more and 10 parts by mass or less, with the components (A) to (C) altogether accounting for 100 parts by mass.
(2) A fiber reinforced thermoplastic resin molded article as set forth in paragraph (1), wherein the reinforcing fiber (A) is carbon fiber or metal fiber.
(3) A fiber reinforced thermoplastic resin molded article as set forth in either paragraph (1) or (2), wherein the polyamide resin (B) has a water absorption rate (at 23°C and 65% RH) of 1.5% or less.
(4) A fiber reinforced thermoplastic resin molded article as set forth in any one of paragraphs (1) to (3), wherein the surface roughness (Rz: maximum height) of the molded article is 5.0 $\mu$m or less.
(5) A fiber reinforced thermoplastic resin molded article as set forth in any one of paragraphs (1) to (4), wherein the polyamide resin (B) contains one polyamide resin selected from polyamides 1010, 1012, 11, and 12.
(6) A fiber reinforced thermoplastic resin molded article as set forth in any one of paragraphs (1) to (5), wherein the modifying agent (C) contains one selected from terpene resin, terpene phenol resin, and epoxy resin.

ADVANTAGEOUS EFFECTS OF THE INVENTION

The fiber reinforced thermoplastic resin molded article according to the present invention serves to obtain a fiber reinforced thermoplastic resin molded article that contains a reinforcing fiber working very effectively for reinforcement and has good mechanical characteristics, particularly in terms of bending elastic modulus, appearance quality, dimensional accuracy, and in particular warpage suppression property. The fiber reinforced thermoplastic resin molded article according to the present invention is extremely useful for the production of electrical and electronic devices, office automation equipment, home appliances, casings, sports goods, and automobile parts.

BRIEF DESCRIPTION OF THE DRAWINGS

[Fig. 1] This is a schematic diagram of a typical cross sectional structure of a fiber bundle used for the present invention.
[Fig. 2] This is a schematic diagram of a typical desirable longitudinal sectional structure of a molding material used for the present invention.
[Fig. 3] This is a schematic diagram of a typical desirable cross sectional structure of a molding material used for the present invention.
[Fig. 4] This is a schematic diagram of another typical desirable cross sectional structure of a molding material used for the present invention.

DESCRIPTION OF PREFERRED EMBODIMENTS

The present invention is described in detail below with reference to embodiments.
The fiber reinforced thermoplastic resin molded article according to the present invention (hereinafter, occasionally referred to simply as molded article) includes a reinforcing fiber (A), a polyamide resin (B) with a melting point of 210°C or less, and a modifying agent (C).
The reinforcing fiber (A) has a weight average fiber length of 0.4 mm or more and 1.5 mm or less and works as a reinforcing material to produce a molded article having good mechanical characteristics, and the polyamide resin (B) with a melting point of 210°C or less is a matrix resin having a relatively high viscosity along with other good characteristics such as high toughness and serves to firmly hold the reinforcing fiber (A) in the molded article. The modifying agent (C) serves to allow the reinforcing fiber (A) to be dispersed uniformly in the polyamide resin (B) with a melting point of 210°C or less to impart excellent mechanical characteristics, high bending elastic modulus in particular, as well as good appearance quality, high dimensional accuracy, and particularly warpage suppression property.

Compared to the generally used technology that employs a polyamide resin and compatibilizer to improve the elastic modulus and appearance quality, the molded article according to the present invention includes the polyamide resin (B) with a melting point of 210°C or less and the modifying agent (C) to serve for significantly improving the bending elastic modulus, appearance quality, dimensional accuracy, and in particular warpage suppression property.

In the molded article according to the present invention, the reinforcing fiber (A) accounts for 10 parts by mass or more and 30 parts by mass or less relative to the total amount of the reinforcing fiber (A), the polyamide resin (B) with a melting point of 210°C or less, and the modifying agent (C) that accounts for 100 parts by mass. If the reinforcing fiber (A) accounts for less than 10 parts by mass, it is undesirable because the molded article will be low in bending elastic modulus. The content of the reinforcing fiber (A) is preferably 12 parts by mass or more, more preferably 15 parts by mass or more. On the other hand, if the content of the reinforcing fiber (A) is more than 30 parts by mass, it is undesirable because the reinforcing fiber (A) will be poorly dispersed in the molded article and accordingly the appearance quality of the molded article will decline. The content of the reinforcing fiber (A) is preferably 28 parts by mass or less, and more preferably 25 parts by mass or less.

It is preferable for the reinforcing fiber (A) used for the present invention to have a thermal conductivity in the fiber axis direction of 5 W/mK or more. If the reinforcing fiber (A) has a thermal conductivity in the fiber axis direction of 5 W/mK or more, it serves to reduce the residual stress that occurs during the molding step and remains in the molded article, thereby leading to warpage suppression in the molded article. In general, for warpage suppression to be realized in a molded article, it is necessary to set a high pressure in the molding step, but it is undesirable because residual stress is likely to remain in the molded article. However, when a molding material as specified herein is used, the reinforcing fiber (A) has a thermal conductivity in the fiber axis direction of 5 W/mK or more, and it works to prevent residual stress from remaining in the molded article, eliminating the need to use an increased pressure in the molding step. As a result, a molded article with less residual stress can be obtained. Thus, if the reinforcing fiber (A) present in the molded article has a thermal conductivity in the fiber axis direction of 5 W/mK or more, it means that the molded article is substantially free of residual stress in its interior. If the reinforcing fiber (A) has a thermal conductivity in the fiber axis direction of less than 5 W/mK, it is undesirable because residual stress is likely to remain in the interior of the molded article and accordingly, the resulting molded article will suffer deformation during long term use at normal temperature or in a particular service environment. From this perspective, the thermal conductivity of the reinforcing fiber (A) in the fiber axis direction is preferably 7 W/mK or more, and more preferably 10 W/mK or more. In the case where the reinforcing fiber (A) is carbon fiber, if the thermal conductivity of the reinforcing fiber (A) in the fiber axis direction is 130 W/mK or more, the thermal conductivity of the reinforcing fiber (A) in the fiber axis direction of 130 W/mK or more tends to lead to breakage of carbon fiber bundles, thereby causing a decline in the mechanical characteristics, particularly bending elastic modulus, of the molded article, and therefore, it is unpreferable. The thermal conductivity of the reinforcing fiber (A) in the fiber axis direction is preferably 100 W/mK or less, more preferably 90 W/mK or less, and still more preferably 70 W/mK or less.

For the reinforcing fiber (A) present in the molded article according to the present invention, its thermal conductivity in the fiber axis direction can be measured by using a generally known technique (for example, see Japanese Unexamined Patent Publication (Kokai) No. SHO-61-47545). When it is to be evaluated for a material to use in a molded article, it can be determined by processing the reinforcing fiber to prepare a disk of unidirectional carbon fiber reinforced plastic (FRP) having a diameter of 10 mm and a thickness of 3 to 6 mm and measuring the specific heat and thermal diffusivity of the FRP by a laser flash type thermal constant measuring instrument (TC-3000, manufactured by Shinku-Riko Inc.), followed by making a calculation according to the equation (1) given below.

$$K = Cp \cdot \alpha \cdot \rho / Vf \qquad (1)$$

Here, K is the thermal conductivity in the fiber axis direction of the reinforcing fiber; Cp is the specific heat of the FRP; $\alpha$ is the thermal diffusivity of the FRP in the fiber axis direction of the reinforcing fiber contained; $\rho$ is the density of the FRP; and Vf is the volume fraction of the reinforcing fibers present in the FRP. The thickness of the FRP may be changed depending on the thermal conductivity in the fiber axis direction of the reinforcing fiber to provide a thick sample with a large thermal conductivity or a thin sample with a low thermal conductivity. Specifically, after laser irradiation, the temperature on the back side of the sample begins to rise, and it takes several tens of milliseconds to reach a maximum temperature. Here, the temperature rise that occurs during this period is represented as $\Delta Tm$, and the thickness of the FRP is adjusted so that the time t1/2, i.e., the time period required for the temperature to increase by half the temperature rise $\Delta Tm$, is 10 msec or more (up to maximum 15 msec). The specific heat can be determined by attaching a glassy carbon plate, used as a light receiving plate, on the front side of the sample, and measuring the temperature rise that occurs after laser irradiation using a type R thermocouple adhered to the center of the back side of the sample. In addition, the measured values can be corrected using sapphire as standard sample. The thermal diffusivity can be determined by forming films by carbon spray to cover both sides of the sample in such a manner that the surfaces are just become invisible and measuring, with an infrared detector, the temperature change on the back side of the sample that occurs after laser irradiation.

Alternatively, the thermal conductivity in the fiber axis direction of the reinforcing fiber can be estimated by making use of the very good correlation between the thermal conductivity and electrical resistivity of the reinforcing fiber. For example, in the case of carbon fiber, it can be estimated from the electrical resistivity in the fiber axis direction by the formula (2) given below.

$$K = 1272.4/ER - 49.4 \qquad (2)$$

In this formula, K is the thermal conductivity in the fiber axis direction of the carbon fiber [W/mK], and ER is the electrical resistivity in the fiber axis direction of the carbon fiber [$\mu\Omega$m]. Here, the electrical resistivity can be determined by extracting a piece of the reinforcing fiber from the molded article, stretching it straight along the centerline of a base paper, fixing it at two points with a conductive paint in such a manner that the test length is equal to the length of the hole in the base paper to prepare a test piece, measuring the resistance value of the test piece prepared above using a resistance measuring device, and making a calculation by the formula (3) given below.

$$ER = (\pi \times Df^2 \times Rf) / (4 \times Lf \times 10^3) \qquad (3)$$

In the formula, Rf is the resistance value ($\Omega$) of the test piece; Df is the diameter of the reinforcing fiber ($\mu$m); and Lf is the test length (mm). Here, the diameter of the reinforcing fiber can be determined by the methods specified as the method B and the method D in JIS R7607:2000, and the test length is equal to the length of the test piece attached to the base paper.

In regard to the type of the reinforcing fiber (A), it is preferably a carbon fiber or a metal fiber because they can work effectively as reinforcement in a molded article. Two or more of these reinforcing fibers may be used in combination to suite the intended reinforcing effect. In that case, an appropriate combination of reinforcing fibers may be identified to suit desired characteristics.

The molded article according to the present invention may also contain an organic fiber or a glass fiber in addition to the aforementioned reinforcing fiber (A). Inorganic fibers such as carbon fiber are rigid and brittle and accordingly, they are more prone to entanglement and more likely to break easily. Therefore, fiber bundles including solely inorganic fibers tend to break easily during the production of a molded article or fall out of the resulting molded article. Organic fibers are so flexible and resistant to breakage that they can be in a curved form in a molded article, and therefore, if they are contained, they can serve to produce a molded article that has a significantly improved impact strength. In particular, they can act to realize an increased impact strength in a low temperature atmosphere in addition to a high impact strength at normal temperature.

For the present invention, when an organic fiber is included, the content of the organic fiber in the molded article is preferably 1 part by mass or more and 45 parts by mass or less relative to 100 parts by mass of the reinforcing fiber (A). If the content of the organic fiber is less than 1 part by mass, the expected improvement in the impact strength of the molded article to be realized by the inclusion of the organic fiber will be small. The content of the organic fiber is preferably 2 parts by mass or more, more preferably 3 parts by mass or more, and still more preferably 4 parts by mass or more. On the other hand, if the content of the organic fiber is more than 45 parts by mass, fiber entanglement increases to cause a decrease in dispersion of the organic fiber in the molded article, often leading to a decline in tensile strength, impact strength, and appearance quality of the molded article. The content of the organic fiber is preferably 30 parts by mass or less, more preferably 20 parts by mass or less, and still more preferably 10 parts by mass or less.

For the present invention, when an organic fiber is included, the tensile elongation at break of the organic fiber is preferably 10% or more and 50% or less. If the tensile elongation at break of the organic fiber is 10% or more, it serves to allow the molded article to have a further improved impact strength. It is more preferably 15% or more. On the other hand, if the tensile elongation at break of the organic fiber is 50% or less, it ensures further improvement in the strength of the fiber and the rigidity of the molded article. It is more preferably 40% or less.

For the present invention, when an organic fiber is included, the tensile elongation at break (%) of the organic fiber can be determined by the method described below. In a chamber in a standard state (20°C, 65% RH), tensile test is conducted under the conditions of a chuck-to-chuck distance of 250 mm and a tensile speed of 300 mm/min to measure the length of the fiber at the time of breakage (excluding those measurements taken when breakage occurs near a chuck, referred to as near-chuck breakage data), and a calculation is made to two decimal places by the following formula and rounded off to one decimal place. Three measurements (n3) are taken and averaged to give a value of tensile elongation at break to use for the present invention.

$$\text{Tensile elongation at break (\%)} = [(\text{length at break (mm)} - 250) / 250] \times 100$$

For the present invention, when an organic fiber is included, the filament fineness of the organic fiber is preferably 0.1 dtex or more and 10 dtex or less.

For the present invention, when an organic fiber is included, the organic fiber material to use can be appropriately selected from a range of materials that do not act to significantly deteriorate the mechanical characteristics of the molded article. Useful ones include fibers produced by spinning such resins as follows: polyolefin based resins such as polyethylene and polypropylene; polyamide based resins such as nylon 6, nylon 66, and aromatic polyamide; polyester based resins such as polyethylene terephthalate and polybutylene terephthalate resin; fluororesins such as polytetrafluoroethylene, perfluoroethylene-propylene copolymer, and ethylene-tetrafluoroethylene copolymer; liquid crystal polymers such as liquid crystal polyester and liquid crystal polyesteramide; and other resins such as polyether ketone, polyether sulfone, polyarylene sulfide, and polyacrylonitrile. Two or more of these may be used in combination. From among these organic fibers, an appropriate one is selected preferably taking into consideration its tensile elongation at break and combination with the polyamide resin (B) with a melting point of 210°C or less to be used as matrix resin. In particular, it is preferable that the melting temperature of the organic fiber is higher by 30°C to 150°C than the molding temperature (melting temperature) for the polyamide resin (B) with a melting point of 210°C or less. Alternatively, the use of an organic fiber made of a resin that is immiscible with the polyamide resin (B) with a melting point of 210°C or less is desirable because it can remain in a fibrous state in the molded article, thereby further improving the impact strength of the molded article. Examples of organic fibers with high melting temperatures include polyester fiber, liquid crystal polyester fiber, polyphenylene sulfide fiber, polyamide fiber, and PAN based flame retardant yarns that are considered non-melting.

For the present invention, when a glass fiber is included, there are no specific limitations on the type of glass fiber to use, and any generally known glass fiber can be used. There are no particular limitations on the fiber diameter, but it is preferably 9 μm or more and 15 μm or less. Specific examples of glass fiber include T-120, T-187, and T-187H, manufactured by Nippon Electric Glass Co., Ltd.

In general, there are various binders that can be adopted to coat glass fibers in order to suppress the generation of fluff and static electricity during use for improving handleability and to ensure improved adhesion with the polyamide resin (B) with a melting point of 210°C or less to be used as matrix. For the present invention as well, glass fibers coated with these binders can be used. An appropriate type of binder may be selected to suit the polyamide resin (B) with a melting point of 210°C or less to be used as matrix. In regard to the amount of the binder applied to the glass fiber, it preferably accounts for 0.1 mass% or more and 3.0 mass% or less as solid content relative to the total mass of the glass fiber and the binder applied thereto. If the binder applied accounts for 0.1 mass% or more, it serves to improve the aforementioned handleability and adhesiveness. On the other hand, if the binder applied accounts for 3.0 mass% or less, it serves more effectively to promote the impregnation of the glass fiber with the polyamide resin (B) with a melting point of 210°C or less.

For the present invention, when a glass fiber is included, useful binders to apply to the glass fiber include, for example, coupling agents including silane based coupling agents such as amino silane, epoxy silane, and acrylic silane; polymers such as vinyl acetate resin, urethane resin, acrylic resin, polyester resin, polyether resin, phenoxy resin, polyamide resin, epoxy resin, and polyolefin resin, as well as modifications thereof; and materials containing oligomers such as polyolefin based wax and other waxes. Here, the polymers and oligomers given above are typically used in the form of aqueous dispersions prepared by dispersing them in water using surface active agents or aqueous solutions prepared by neutralizing or hydrating the carboxyl groups and amide groups present in the backbones of the polymers or oligomers. In addition to the components listed above, the binder may also include inorganic salts such as lithium chloride and potassium iodide, antistatic agents such as ammonium chloride type, ammonium ethosulfate type, or other type quaternary ammonium salts, and lubricants such as aliphatic ester based, aliphatic ether based, aromatic ester based, or aromatic ether based surface active agents.

For the present invention, when a glass fiber is included, its content is preferably 1 part by mass or more and 45 parts by mass or less relative to 100 parts by mass of the reinforcing fiber (A). If the content of the glass fiber is less than 1 part by mass, the expected improvement in the impact strength of the molded article to be realized by the inclusion of the glass fiber will be small. From this perspective, the content of the glass fiber is preferably 2 parts by mass or more, more preferably 3 parts by mass or more, and still more preferably 4 parts by mass or more. On the other hand, if the content of the glass fiber is more than 45 parts by mass, fiber entanglement increases to cause a decrease in dispersion of the glass fiber in the molded article, often leading to a decline in tensile strength, impact strength, and appearance quality of the molded article. The content of the glass fiber is preferably 30 parts by mass or less, more preferably 20 parts by mass or less, and still more preferably 10 parts by mass or less.

In the molded article according to the present invention, the polyamide resin (B) with a melting point of 210°C or less accounts for 60 parts by mass or more and 89 parts by mass or less relative to the total amount of the components (A) to (C) that accounts for 100 parts by mass. If the content of the polyamide resin (B) is 60 parts by mass or more, it is preferable because it leads to a relatively high resin proportion and serves to produce a molded article that can maintain its shape firmly. On the other hand, if the content of the polyamide resin (B) is 89 parts by mass or less, it is preferable because it allows the aforementioned components (A) and (B) to have required contents and serve to produce a molded article that can exhibit fully developed characteristics.

The polyamide resin (B) used for the present invention has a melting point of 210°C or less. Having a melting point of 210°C or less serves to use a lower temperature in the molding step for producing a molded article, leading to a smaller residual stress remaining in the molded article. If a polyamide resin having a melting point of more than 210°C is used, it is not preferable because it will require a higher processing temperature for the production of a molded article, and the residual stress that is generated in the molded article will be left therein. The melting point of the polyamide resin to use is preferably 205°C or less, and more preferably 200°C or less. The use of a polyamide resin having a melting point of less than 150°C is not preferable because the production of such a polyamide resin itself is technically difficult to achieve and, even if it can be achieved, the resulting resin is likely to fail in developing good mechanical characteristics and high toughness inherent in most polyamide resins, leading to a molded article having poor mechanical characteristics, particularly in terms of bending elastic modulus. From this perspective, the melting point is preferably 160°C or more, and more preferably 170°C or more.

The melting point of the aforementioned polyamide resin can be measured by a commonly used technique. For example, it can be measured by using a differential scanning calorimeter (DSC), in which the temperature is increased from 25°C at a rate of 10°C/min and the top of the resulting endothermic peak is assumed to represent the melting point of the polyamide resin. Furthermore, to extract the aforementioned polyamide resin from the molded article according to the present invention, a typical method is to select an appropriate solution in which only the polyamide resin (B) can dissolve, followed by dissolving and extracting only the polyamide resin from the molded article.

From the viewpoint of obtaining a molded article having good mechanical characteristics, it is preferable for the polyamide resin (B) with a melting point of 210°C or less to be a polyamide resin of a structure that includes a monomer unit containing 10 or more carbon atoms. In such cases, the polyamide resin (B) with a melting point of 210°C or less may be either of the following two types: one composed mainly of a monomer unit derived from a lactam and one composed mainly of a combination of a monomer unit derived from a diamine and a monomer unit derived from a dicarboxylic acid. From the viewpoint of obtaining a molded article having good mechanical characteristics, it is preferable to adopt an aliphatic polyamide composed mainly of a monomer unit derived from a lactam.

Examples of the monomer unit containing 10 or more carbon atoms include monomer units derived from lactams containing 10 or more carbon atoms, monomer units derived from dicarboxylic acids containing 10 or more carbon atoms, and monomer units derived from diamines containing 10 or more carbon atoms. When adopting a monomer unit derived from a dicarboxylic acid containing 10 or more carbon atoms, the monomer unit derived from a diamine may contain only 9 or less carbon atoms, while when adopting a monomer unit derived from a diamine containing 10 or more carbon atoms, the monomer unit derived from a dicarboxylic acid may contain only 9 or less carbon atoms. From the viewpoint of obtaining a molded article having high impact strength, it is preferable that the monomer unit containing 10 or more carbon atoms be a monomer unit derived from a lactam containing 10 or more carbon atoms. From the viewpoint of the availability of the polyamide resin (B) with a melting point of 210°C or less, the number of carbon atoms in a monomer unit is preferably 12 or less.

For the present invention, it is preferable for the polyamide resin (B) with a melting point of 210°C or less to contain at least one polyamide resin selected from the group consisting of polyamide 11 resin, polyamide 12 resin, polyamide 1010 resin, and polyamide 1012 resin, which are lightweight and have good mechanical characteristics and moldability in a good balance. From the viewpoint of the fact that it is possible to lower the processing temperature to use in the molding step and obtain a molded article with smaller internal stress, it is preferable to use either or both of polyamide 11 resin and polyamide 12 resin. Commercially available products of polyamide 11 resin include, for example, Rilsan (registered trademark), manufactured by Arkema K.K. Commercially available products of polyamide 12 resin include, for example, Rilsamid (registered trademark), manufactured by Arkema K.K., UBESTA (registered trademark), manufactured by Ube Industries, Ltd., and Daiamide (registered trademark), manufactured by Daicel-Evonik Ltd.

There are no particular limitations on the degree of polymerization of these polyamide resins, but it is preferable that the relative viscosity measured at 25°C of a solution prepared by dissolving 0.25 g of a polyamide resin in 25 ml of 98% sulfuric acid be in the range of 1.5 or more and 5.0 or less, particularly preferably in the range of 2.0 or more and 3.5 or less. Furthermore, to extract the aforementioned polyamide resin from the molded article according to the present invention, a typical method is to select an appropriate solution in which only the polyamide resin (B) can dissolve, followed by dissolving and extracting only the polyamide resin from the molded article.

The molded article according to the present invention contains 1 part by mass or more and 10 parts by mass or less of a modifying agent (C) relative to the total amount of the components (A) to (C) that accounts for 100 parts by mass.

In most cases, the modifying agent (C) is low in molecular weight and is ordinarily in the form of a relatively brittle and easily breakable solid or a liquid at room temperature. Being low in molecular weight, the modifying agent (C) is high in fluidity and can work to enhance the dispersion of the reinforcing fiber (A) in the polyamide resin (B) with a melting point of 210°C or less. Thus, it acts as a dispersing agent for the reinforcing fiber in the matrix resin. Examples of the modifying agents (C) include terpene resin, terpene phenol resin, and epoxy resin, and it is preferable to contain at least one selected from the group consisting of terpene resin, terpene phenol resin, and epoxy resin. It is preferable for the modifying agents (C) to be high in affinity with the polyamide resin (B) with a melting point of 210°C or less. If a substance high in affinity with the polyamide resin (B) with a melting point of 210°C or less is adopted as the modifying agent (C), it can homogenize efficiently with the polyamide resin (B) with a melting point of 210°C or less during the steps for production or molding of molding materials, thereby further enhancing the dispersion of the reinforcing fiber (A). In other words, the fact that the molded article contains such a modifying agent (C) indicates that the reinforcing fiber (A) is dispersed favorably in the molded article.

An appropriate modifying agent (C) is selected taking into consideration its combination with the polyamide resin (B) with a melting point of 210°C or less. For example, terpene resin is used suitably if the molding temperature is in the range of 150°C or more and 200°C or less. Epoxy resin and terpene phenol resin are used suitably if the molding temperature is in the range of 200°C or more and 300°C or less.

The melt viscosity of the modifying agent (C) at 200°C is preferably 0.01 Pa·s or more and 10 Pa·s or less. If the melt viscosity is 0.01 Pa·s or more at 200°C, it serves more effectively to prevent breakage from originating from the modifying agent (C), thereby leading to a molded article having improved impact characteristics. The melt viscosity is more preferably 0.05 Pa·s or more, and more preferably 0.1 Pa·s or more. On the other hand, if the melt viscosity is 10 Pa·s or less at 200°C, it makes it easier to allow the modifying agent (C) to penetrate into the interior of the reinforcing fiber. Therefore, during the molding step for the molded article according to the present invention, the dispersion of the reinforcing fiber (A) can be further enhanced, resulting in a molded article in which the reinforcing fiber (A) is dispersed favorably. From this perspective, the melt viscosity is preferably 5 Pa·s or less, and more preferably 2 Pa·s or less. Here, the melt viscosities of the polyamide resin (B) with a melting point of 210°C or less and the modifying agent (C) can be measured using a rheometer with 40 mm parallel plates at an appropriate temperature at 0.5 Hz.

It is preferable for the modifying agent (C) to have a number average molecular weight of 200 or more and 50,000 or less. If it has a number average molecular weight of 200 or more, it enables the production of a molded article having further improved mechanical characteristics, impact characteristics in particular. The number average molecular weight is more preferably 1,000 or more. Furthermore, if its number average molecular weight is 50,000 or less, it means that the viscosity of the modifying agent (C) is suitably low and can work favorably in impregnating the reinforcing fiber (A) present in the molded article, thereby improving the dispersion of the reinforcing fiber (A) in the molded article. The number average molecular weight is more preferably 3,000 or less. Here, the number average molecular weight of such a compound can be measured by gel permeation chromatography (GPC).

For the modifying agent (C), it is preferable that the heating loss that occurs at molding temperatures measured under the condition of a heating rate of 10°C/min (in air) be 5 mass% or less. It is more preferably 3 mass% or less. If the heating loss is 5 mass% or less, it is possible to suppress the generation of decomposition gases during impregnation of the reinforcing fiber (A), thereby preventing the formation of voids from occurring in the molded article. Furthermore, it is also possible to depress the gas generation particularly during a molding step performed at a high temperature. This indicates that if the heating loss in the modifying agent (C) that occurs at the molding temperature measured under the condition of a heating rate of 10°C/min (in air) is 5 mass% or less, the resulting molded article is free of voids. Here, the heating loss referred to for the present invention represents the rate of loss in mass of the modifying agent (C) caused by heating under the aforementioned heating conditions relative to the mass of the modifying agent (C) measured before heating, which accounts for 100%, and it can be calculated by the formula given below. Here, the difference in mass between before and after heating can be determined by thermogravimetric analysis (TGA) in which the mass at a molding temperature is measured using a platinum sample pan in an air atmosphere at a heating rate of 10°C/min.

(Heating loss) [mass%] = {(mass before heating - mass after heating) / mass before heating} $\times$ 100

In addition, the rate of change in melt viscosity of the modifying agent (C) that occurs at 200°C during heating for 2 hours is preferably 2% or less. Even in a prolonged process for producing a composite material that is composed mainly of fiber bundles including the reinforcing fiber (A), which is in the form of continuous fiber bundles, and the modifying agent (C) that fill the spaces among the filaments, uneven adhesion can be suppressed and the production of the composite material can be maintained stably if the rate of change in melt viscosity is 2% or less. The rate of change in melt viscosity is more preferably 1.5% or less, and still more preferably 1.3% or less.

Here, the rate of change in melt viscosity of the modifying agent (C) can be determined by the method described below. First, the melt viscosity at 200°C is measured at 0.5 Hz using a rheometer with 40 mm parallel plates. Then, after leaving the modifying agent (C) in a hot air dryer at 200°C for 2 hours, the melt viscosity at 200°C is measured in the same way as above, and the rate of change in melt viscosity is calculated by the following formula.

(Rate of change in melt viscosity [%]) = {I(melt viscosity at 200°C before heating at 200°C for 2 hours - melt viscosity at 200°C after heating at 200°C for 2 hours) | / (melt viscosity at 200°C before heating at 200°C for 2 hours)} × 100

For the present invention, an epoxy resin that can be used suitably as the modifying agent (C) is a compound that has two or more epoxy groups, is substantially free of a curing agent, and does not cure through so-called three dimensional crosslinking when heated. Because of having epoxy groups, the epoxy resin can interact easily with the reinforcing fiber (A) and is highly compatible in the impregnation step with the composite material, which is composed mainly of fiber bundles including the reinforcing fiber (A), which is in the form of continuous fiber bundles, and the modifying agent (C) that fill the spaces among the filaments, thereby promoting the impregnation. Furthermore, the dispersion of the reinforcing fiber (A) in the molding step is further improved.

Here, examples of the epoxy resin include glycidyl ether type epoxy resins, glycidyl ester type epoxy resins, glycidyl amine type epoxy resins, and alicyclic epoxy resins. Two or more of these may be used in combination.

The glycidyl ether type epoxy resins include, for example, bisphenol A type epoxy resin, bisphenol F type epoxy resin, bisphenol AD type epoxy resin, halogenated bisphenol A type epoxy resin, bisphenol S type epoxy resin, resorcinol type epoxy resin, hydrogenated bisphenol A type epoxy resin, phenol novolac type epoxy resin, cresol novolac type epoxy resin, aliphatic epoxy resin having ether bonding, naphthalene type epoxy resin, biphenyl type epoxy resin, biphenylaralkyl type epoxy resin, and dicyclopentadiene type epoxy resin.

The glycidyl ester type epoxy resins include, for example, hexahydrophthalic acid diglycidyl ester and dimer acid diglycidyl ester.

The glycidyl amine type epoxy resins include, for example, triglycidyl isocyanurate, tetraglycidyl diaminodiphenyl methane, tetraglycidyl methaxylene diamine, and aminophenol type epoxy resins.

The alicyclic epoxy resins include, for example, 3,4-epoxy-6-methylcyclohexylmethyl carboxylate and 3,4-epoxycyclohexylmethyl carboxylate.

Of these, glycidyl ether type epoxy resins are preferable and bisphenol A type epoxy resins and bisphenol F type epoxy resins are more preferable because they have high viscosity and heat resistance in a good balance.

Furthermore, it is preferable for the epoxy resin used as the modifying agent (C) to have a number average molecular weight of 200 or more and 5,000 or less. If the epoxy resin in use has a number average molecular weight of 200 or more, it enables the production of a molded article having further improved mechanical characteristics. It is more preferably 800 or more, and still more preferably 1,000 or more. On the other hand, if the epoxy resin has a number average molecular weight of 5,000 or less, it can work favorably in impregnating the fiber bundles that include the reinforcing fiber (A), which is in the form of continuous fiber bundles, thereby ensuring further improved dispersion of the reinforcing fiber (A). It is more preferably 4,000 or less, and still more preferably 3,000 or less. Here, the number average molecular weight of the epoxy resin can be measured by gel permeation chromatography (GPC).

For the present invention, terpene resins that can be used suitably as the modifying agent (C) include, for example, polymers and copolymers that are produced by polymerizing terpene monomers, along with aromatic monomers etc. as required, in the presence of a Friedel-Crafts type catalyst in an organic solvent.

The terpene monomers include, for example, α-pinene, β-pinene, dipentene, d-limonene, myrcene, alloocimene, ocimene, α-phellandrene, α-terpinene, γ-terpinene, terpinolene, 1,8-cineole, 1,4-cineole, α-terpineol, β-terpineol, γ-terpineol, sabinene, various p-menthadienes, and various carenes.

In addition, useful aromatic monomers include, for example, styrene and α-methyl styrene. Of these, α-pinene, β-pinene, dipentene, and d-limonene are preferable because they are high in compatibility with the polyamide resin (B) with a melting point of 210°C or less and in particular, homopolymers of these terpene monomers are more preferable.

Furthermore, other useful ones include hydrogenated terpene resins produced by hydrogenating these terpene resins and terpene phenol resins produced by reacting terpene monomers with phenols in the presence of a catalyst. Here, preferable phenols include those having 1 to 3 substituents that are of the same type selected from the group consisting of alkyl groups, halogen atoms, and hydroxyl group located on the benzene rings in the phenols. Specific examples thereof include cresol, xylenol, ethylphenol, butylphenol, t-butylphenol, nonylphenol, 3,4,5-trimethylphenol, chlorophenol, bromophenol, chlorocresol, hydroquinone, resorcinol, and orcinol. Two or more of these may be used in combination. Of these, phenol and cresol are preferable. In particular, hydrogenated terpene resins are preferable because of their higher compatibility with the polyamide resin (B) with a melting point of 210°C or less. Hereinafter, terpene resins, hydrogenated terpene resins, and terpene phenol resins are occasionally referred to collectively as terpene based resins.

In addition, it is also preferable for a terpene based resin to have a glass transition temperature of 30°C or more and 100°C or less, though there is no particular limit thereon. If it has a glass transition temperature of 30°C or more, it allows the modifying agent (C) to be high in handleability in the molding step. Furthermore, if its glass transition temperature is 100°C or less, it allows the fluidity of the modifying agent (C) to be controlled moderately to ensure an increased moldability in the molding the step.

Furthermore, it is preferable for the terpene based resin in use to have a number average molecular weight of 200 or more and 5,000 or less. If it has a number average molecular weight of 200 or more, it enables the production of a molded article having further improved mechanical characteristics, impact characteristics in particular. Furthermore, if its number average molecular weight is 5,000 or less, it means that the viscosity of the terpene based resin is moderately low to ensure favorable impregnation, allowing the reinforcing fiber (A) to be dispersed more favorably in the molded article.

Here, the number average molecular weight of a terpene based resin can be measured by gel permeation chromatography (GPC).

Furthermore, to extract the terpene based resin from the molded article according to the present invention, a good method is to select an appropriate solvent in which the terpene based resin contained in the molded article can dissolve, and its extraction is carried out by the Soxhlet extraction technique etc. Here, for example, acetone can be used as the solvent in which the terpene based resin can dissolve.

In the molding material used to produce the fiber reinforced thermoplastic resin molded article according to the present invention, the content of the modifying agent (C) is preferably 1 part by mass or more and 10 parts by mass or less relative to the total amount of the reinforcing fiber (A), the polyamide resin (B) with a melting point of 210°C or less, and the modifying agent (C) that accounts for 100 parts by mass. This content is maintained in the molded article. If the content of the modifying agent (C) is less than 1 part by weight, it leads to a decline in the dispersion of the reinforcing fiber (A) into the matrix resin in the molded article, leading to inferior dispersion. The content of the modifying agents (C) is preferably 2 parts by mass or more, and more preferably 4 parts by mass or more. On the other hand, if the content of the modifying agent (C) is more than 10 parts by weight, it leads to a molded article having a decreased bending elastic modulus. It is preferably 9 parts by mass or less, and more preferably 8 parts by mass or less.

The molded article and molding material according to the present invention may contain other components in addition to the aforementioned components (A) to (C) unless they impair the object of the invention. Examples such other components include thermosetting resins, inorganic fillers other than carbon fibers, flame retardants, crystal nucleating agents, ultraviolet absorbers, antioxidants, impact absorbers, damping agents, antibacterial agents, insect repellents, deodorants, anti-coloring agents, heat stabilizers, mold release agents, antistatic agents, plasticizers, lubricants, colorants, pigments, dyes, foaming agents, antifoaming agents, and coupling agents.

Next, in order to produce the molded article according to the present invention, a preferable method is to adopt a molding technique that uses a mold, and various molding techniques are available including injection molding, extrusion molding, and press molding. In particular, the use of a molding technique that uses an injection molding machine serves to produce a stable molded article continuously. There are no particular restrictions on the conditions for performing injection molding, but for example, preferable conditions include an injection time of 0.1 second or more and 20 seconds or less, more preferably 1 second or more and 10 seconds or less, a back pressure of 0.1 MPa or more and 20 MPa or less, preferably 3 MPa or more and 15 MPa or less, an injection holding pressure of 1 MPa or more and 150 MPa or less, preferably 5 MPa or more and 100 MPa or less, an injection holding time of 1 second or more and 30 seconds or less, preferably 5 seconds or more and 20 seconds or less, a cylinder temperature of 180°C or more and 350°C or less, and a mold temperature of 20°C or more and 160°C or less. Here, the cylinder temperature means the temperature of the portion of the injection molding machine where the molding material is heated and melted, and the mold temperature means the temperature of the mold into which the resin to be molded to a predetermined shape is injected. If these conditions, particularly the injection time, back pressure, and mold temperature, are set appropriately, it allows the weight average fiber length of the reinforcing fiber in the molded article to be easily adjusted so that the formula [1] given below is satisfied.

For the fiber reinforced thermoplastic resin molded article according to the present invention, the weight average fiber length (Lw) of the reinforcing fiber (A) is 0.4 mm or more and 1.5 mm or less. If the weight average fiber length (Lw) is 0.4 mm or more, it enables the production of a molded article having further improved mechanical characteristics including bending elastic modulus in particular. Lw is preferably 0.5 mm or more. On the other hand, if the weight average fiber length (Lw) is 1.5 mm or less, it can serve to suppress entanglement of filaments of the reinforcing fiber (A), thereby improving their dispersion and leading to a molded article having improved mechanical characteristics including bending elastic modulus and appearance quality as well as suppressed warpage in particular. Lw is more preferably 1.3 mm or less. There are no particular limitations on the method to use for allowing the reinforcing fiber (A) to have a weight average fiber length (Lw) of 0.4 mm or more and 1.5 mm or less, but it is preferable to use continuous reinforcing fiber bundles as the starting material. Here, the term "weight average fiber length" used for the present invention refers to the weight average fiber length calculated by the formula given below, which is developed by applying the method generally used for calculating the weight average molecular weight to fiber length calculation so that contributions of fiber lengths to various characteristics are taken into consideration instead of simply calculating the number average. However, the formula given below is applicable when the reinforcing fiber (A) has constant fiber diameter and density.

$$\text{Weight average fiber length} = \Sigma(M_i^2 \times N_i) / \Sigma(M_i \times N_i)$$

Mi: Fiber length (mm)
Ni: Number of reinforcing fibers with fiber length Mi

Measurement of the above weight average fiber length can be performed by the method described below. A test piece is cut out appropriately from a prepared molded article using a microscope equipped with a hot stage, and it is then sandwiched between glass plates and heated on the hot stage set at an appropriate temperature between 150°C to 350°C depending on the melting temperature of the polyamide resin (B) in use, which has a melting point of 210°C or less, to form a film in which fibers are dispersed uniformly, followed by observing the polyamide resin (B) in a molten state under an optical microscope (at a magnification of 50 to 200). The fiber lengths of 1,000 randomly selected filaments of the reinforcing fiber (A) are measured, and the weight average fiber length (Lw) is calculated by the formula given above. Alternatively, a test piece is cut out from a molded article and put in a solution in which the polyamide resin (B) with a melting point of 210°C or less is soluble, and then it is heated as appropriate to prepare a solution in which the reinforcing fiber (A) is dispersed uniformly. Subsequently, this solution is cast onto filter paper and the solution is evaporated, followed by observing the reinforcing fiber (A) dispersed on the filter paper under an optical microscope (at a magnification of 50 to 200). The fiber lengths of 1,000 randomly selected filaments of the reinforcing fiber (A) are measured, and the weight average fiber length (Lw) is calculated by the formula given above. Here, hexafluoroisopropanol (HFIP), for example, can be used as the solution for this purpose. For example, furthermore, a quantitative filter paper (model No.5C, manufactured by Advantec Co., Ltd.) can be adopted as the filter paper to use for this purpose.

The polyamide resin (B) with a melting point of 210°C or less to use for the present invention is preferably a polyamide resin that shows a water absorption rate of 1.5% or less after being left to stand for 24 hours in a constant temperature chamber maintained at 23°C and a humidity of 65% RH, because it can serve to produce a molded article that suffers little dimensional change, i.e. little warpage, due to water absorption. If the water absorption rate is more than 1.5%, a significant dimensional change, i.e. warpage, will occur as the resin absorbs water, and therefore it is not preferable. The water absorption rate is preferably 1.4% or less, and more preferably 1.3% or less.

For the measurement of the aforementioned water absorption rate, the polyamide resin (B) to use is dried for 24 hours in a vacuum drying machine set at 80°C and then cooled in the vacuum drying machine. After that, pellets are transferred quickly from the vacuum drying machine into an aluminum cup, weighed to determine their mass, left to stand for 24 hours in a constant temperature chamber maintained at 23°C and a humidity of 65% RH, and then weighed again to determine their mass, followed by calculation from the water absorption rates measured before and after water absorption.

It is preferable for the molded article according to the present invention to have a surface roughness (Rz: maximum height) of 5.0 $\mu$m or less. Here, the surface roughness Rz is a parameter in the height direction known as the "maximum height", which can be determined by extracting a part of the roughness curve measured by a roughness meter over a reference length and calculating the sum of the highest point (maximum peak height: Rp) and the deepest point (maximum valley depth: Rv).

To determine the aforementioned surface roughness Rz of a molded article, an ISO type dumbbell test piece, for example, is produced by molding and the surface originally in contact with the mirror surface of the mold was examined by a surface roughness measuring instrument (surface roughness tester manufactured by Tokyo Seimitsu Co., Ltd.) to determine the value of Rz. Here, a smaller value of Rz means a smaller surface roughness and indicates a smoother surface.

If the surface roughness Rz is 5.0 $\mu$m or less, it indicates that the surface of the molded article has suppressed irregularities formed of the reinforcing fiber (A) and the polyamide resin (B) with a melting point of 210°C or less. Thus, there are few irregularities on the molded article, and it serves to allow the mold and the molded article to come in close contact with each other during the molding step so that the heat retained inside the molded article can be efficiently dissipated to the surface layer of the molded article and the mold. As a result, the cooling temperature gradient that occurs in the interior and the surface layer of the molded article can be made smaller to suppress the thermal shrinkage of the molded article during cooling. Thus, the resulting molded article has little residual stress. From this perspective, the surface roughness Rz of the molded article is preferably 4.5 $\mu$m or less, more preferably 4.0 $\mu$m or less, and still more preferably 3.5 $\mu$m or less.

Next, features of the molding material used for molding the molded article according to the present invention are described below.

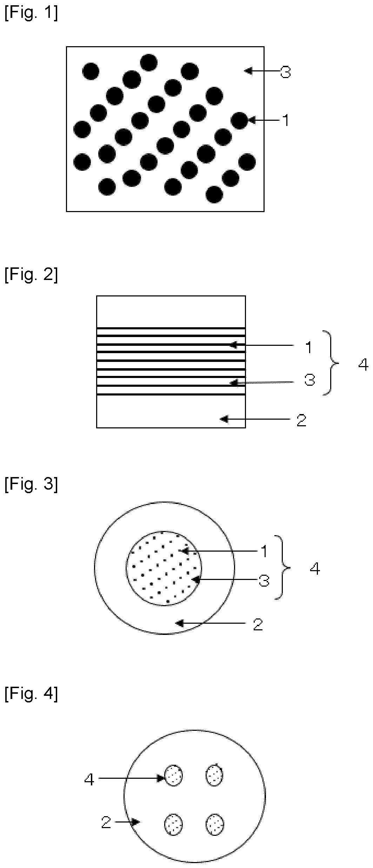

The molding material used to mold the molded article according to the present invention preferably includes a fiber bundle containing the reinforcing fiber (A), which is in the form of continuous fiber bundle, extending in the polyamide resin (B) with a melting point of 210°C or less as shown in Fig. 2. It may have a composite body in which the spaces among the filaments in the fiber bundle are filled with the modifying agent (C). The composite body includes fiber bundles impregnated with the modifying agent (C), forming a state in which islands of the reinforcing fiber (A) are dispersed in a sea of the modifying agent (C). It is preferable for the molding material according to the present invention to contain a fiber bundle or a composite body surrounded by the polyamide resin (B) with a melting point of 210°C or less as shown in Fig. 3. In a cross section perpendicular to the length direction of the molding material, it is preferable that the polyamide resin (B) with a melting point of 210°C or less is disposed in such a manner that it surrounds the fiber bundle or composite body or that the fiber bundle or composite body and the polyamide resin (B) with a melting point of 210°C or less are disposed in a layered state, with the outermost layer being a layer of the polyamide resin (B) with a melting point of 210°C or less.

In most cases, the modifying agent (C) that is contained in the molding material used to mold the molded article according to the present invention is low in molecular weight and is in the form of a relatively brittle and easily breakable solid or a liquid at room temperature. By forming such a structure in which a composite body composed mainly of a fiber bundle containing the reinforcing fiber (A), which is in the form of a continuous fiber bundle, and the modifying agent (C) that fills the spaces among the filaments in the fiber bundle, is surrounded by the polyamide resin (B) with a melting point of 210°C or less, it is possible for the high molecular weight polyamide resin (B) with a melting point of 210°C or less to serve for protecting the composite body and preventing the modifying agent (C) from being broken or dissipated as a result of impact, scratching, etc., that occur during conveyance, handling, etc., of the molding material, thereby allowing the molding material to maintain its shape. From the viewpoint of handleability, it is preferable for the molding material used for the present invention to retain the aforementioned shape until it is fed to the molding step.

As described in detail later, when forming a composite body composed mainly of a fiber bundle containing the reinforcing fiber (A), which is in the form of a continuous fiber bundle, and the modifying agent (C) that fills the spaces among the filaments in the fiber bundle, the melting temperature (temperature in the melting bath) during the supply of the modifying agent (C) is preferably 100°C or more and 300°C or less. Here, the melt viscosity of the modifying agent (C) at 200°C can be used as an indicator of the suitability of the modifying agent (C) for impregnating the fiber bundle that contains the reinforcing fiber (A), which is in the form of a continuous fiber bundle. If the melt viscosity at 200°C is in the aforementioned preferable range, it exhibits a high suitability for impregnating the reinforcing fiber (A) in the preferable melting temperature range, thereby ensuring better dispersion of the reinforcing fiber (A) and serving to produce a molded article having enhanced mechanical characteristics, particularly in terms of high bending elastic modulus, appearance quality, and dimensional accuracy, as well as warpage suppression in particular.

The modifying agent (C) present in the molding material used for producing the molded article according to the present invention only needs to be in any of the following forms: (i) it may be present therein in the form of a composite body including a fiber bundle impregnated therewith; (ii) may be present throughout the molding material in the form of a thermoplastic resin composition along with the polyamide resin (B) with a melting point of 210°C or less; and (iii) may be present in a combination of both forms, i.e., partially in the form of a composite body including a fiber bundle impregnated therewith and partially in the form of a thermoplastic resin composition along with the polyamide resin (B) with a melting point of 210°C or less that surrounds the composite body.

In the case where the molding material includes a composite body, it may have such a structure in which the polyamide resin (B) with a melting point of 210°C or less or a composition containing the polyamide resin (B) with a melting point of 210°C or less and the modifying agent (C) exists in spaces among reinforcing fibers that surround the composite body to impregnate it.

Described next will be a method for preparing a molding material that is suitable for producing the molded article according to the present invention. There are no specific limitations on the method to use for producing the molding material for the present invention, and a generally known production method may be adopted. For example, it can be produced by the method described below.

First, rovings of the reinforcing fiber (A) are combined in parallel in the fiber length direction and used to produce a fiber bundle that contains the reinforcing fiber (A). Here, a roving is in a state of a continuous fiber bundle unwound from a commercial product that is in the form of a reinforcing fiber bundle wound in a cylindrical shape. Next, if necessary, the modifying agent (C) is melted and the fiber bundle is impregnated with it to produce a composite body. Furthermore, the composite body is introduced into an impregnation die filled with the polyamide resin (B) with a melting point of 210°C or less, which is in a molten state, so that the composite body is covered by a resin composition containing the polyamide resin (B) with a melting point of 210°C or less, and then it is pulled out through a nozzle. After cooling and solidifying, it is pelletized to an appropriate length to provide a molding material. As long as being present in the region surrounding the composite body, part of the polyamide resin (B) with a melting point of 210°C or less may penetrate into spaces among reinforcing fibers existing in the outer region of the composite body.

For example, Figs. 2 and 3 are schematic diagrams showing examples of preferable cross sectional structures of the molding material to use for the present invention. The reference numeral 1 denotes the reinforcing fiber (A); the reference numeral 2 denotes the polyamide resin (B) with a melting point of 210°C or less; the reference numeral 3 denotes the modifying agent (C); and the reference numeral 4 denotes the composite body.

The cross sectional structure of the molding material is not limited to the ones shown in the diagrams as long as the polyamide resin (B) with a melting point of 210°C or less is disposed so that it adheres to the outer side of the fiber bundle.

As shown in Fig. 2, which gives a cross section parallel to the axial direction of a reinforcing fiber bundle, it is preferable for the molding material to have a cross section in which a composite body including a bundle of the reinforcing fiber (A) and the modifying agent (C) acts as a core component that is sandwiched between the polyamide resin (B) with a melting point of 210°C or less to form a layered structure. As shown in Fig. 3, which gives a cross section perpendicular to the axial direction of a reinforcing fiber bundle, it is preferable that a composite body including a bundle of the reinforcing fiber (A) and the modifying agent (C) forms a core that is surrounded by the polyamide resin (B) with a melting point of 210°C or less to form a core-sheath structure. Furthermore, as shown in Fig. 4, there is another preferable structure in which a a plurality of composite bodies each including of a bundle of the reinforcing fiber (A) and the modifying agent (C) are surrounded by the polyamide resin (B) with a melting point of 210°C or less. In this case, it is preferable for the structure to contain 2 to 6 such regions each filled with a composite body including the reinforcing fiber (A) and the modifying agent (C). Here, Fig. 1 is a schematic diagram of a typical cross sectional structure of a composite body including a bundle of the reinforcing fiber (A) and the modifying agent (C) used for the present invention. As illustrated in Fig. 1, which shows a composite body including a bundle of the reinforcing fiber (A) and the modifying agent (C), the spaces among the filaments 1 of the reinforcing fiber (A) are filled with the modifying agent (C). It means that the filaments of the reinforcing fiber (A) are dispersed like islands in a sea of the modifying agent (C). For the present invention, the term "longitudinal section" used herein means a section that includes the axial direction, and the term "cross section" means a section perpendicular to the axial direction. Furthermore, in the case of a molding material having a cylindrical shape such as a pellet, for example, the axial direction refers to the axis of the cylinder.

It should be noted that the length of the reinforcing fiber (A) is substantially equal to the length of the molding material. This is obvious from the embodiment shown in Fig. 3. In the molding material shown in Fig. 3, the filaments in the reinforcing fiber (A) are aligned substantially in parallel in the axial direction (same direction) of the molding material, and the length of the reinforcing fiber (A) is substantially equal to the length of the molding material. In Fig. 3, black dots represent the reinforcing fiber (A) and the white region represents the modifying agent (C). The fact that the length of the fiber bundle is substantially equal to the length of the molding material makes it possible to produce a molded article in which the reinforcing fiber (A) has an increased weight average fiber length, leading to further improved mechanical characteristics.

The expression "aligned substantially in parallel" used herein means a state in which the axis line of the long axis of the reinforcing fiber (A) and the axis line of the long axis of the molding material are nearly in the same direction. The angle formed between these axis lines is preferably 20° or less, more preferably 10° or less, and still more preferably 5° or less. In addition, the expression "substantially equal to the length" means, for example, that there is no intentional cuts in the reinforcing fiber (A) in the molding material and that the reinforcing fiber (A) contains no filaments that are significantly shorter than the overall length of the molding material. In particular, although there are no specific limitations on the quantity of filaments of the reinforcing fiber (A) that are shorter than the overall length of the molding material, it is preferable that the filaments of the reinforcing fiber (A) that are shorter than 50% of the overall length of the molding material account for 30% by mass or less, more preferably 20% by mass or less, of all filaments of the reinforcing fiber (A). The fact that the length of the reinforcing fiber (A) is substantially equal to that of the molding material makes it possible to allow the reinforcing fiber (A) to be longer in the molded article, leading to increased tensile strength and impact strength. The lengths of the reinforcing fiber (A) and molding material are preferably 18 mm or less and 3 mm or more, more preferably 15 mm or less and 5 mm or more. It is preferable for the molding material to maintain a nearly identical cross sectional shape continuously along the length direction.

Described next will be a typical method for supply and adhesion of the modifying agent (C) as a part of a method for producing the molding material designed to use for the production of the molded article according to the present invention.

For the present invention, there are no particular limitations on the method to use for impregnating the reinforcing fiber (A) with the modifying agent (C) to produce a fiber bundle, and for example, it can be carried out by a process that includes a step (I) for supplying the modifying agent (C) to the reinforcing fiber (A) to allow the modifying agent (C) in a molten state at 100°C to 300°C to come into contact with the reinforcing fiber (A) (the modifying agent (C) may be blended with other resins, in which case, such other resins, along with the modifying agent (C), are adhered to and allowed to impregnate the reinforcing fiber (A)) so that the modifying agent (C) is adhered to the reinforcing fiber (A) and a step (II) for heating the reinforcing fiber (A) having the modifying agent (C) adhered thereto in order to achieve its impregnation.

There are no particular limitations on the method to use in the step (I) for supplying the modifying agent (C) to adhere it to the reinforcing fiber (A), and it may be useful to adopt, for example, a method that is generally used to imparting an oil agent, sizing agent, or matrix resin to the reinforcing fiber (A). In particular, dipping and coating are used preferably.

Here, dipping refers to a method in which the modifying agent (C) is sent into a melting bath by a pump and the reinforcing fiber (A) is passed through the melting bath. The dipping of the reinforcing fiber (A) in a melting bath containing the modifying agent (C) allows the modifying agent (C) to be adhered firmly to the reinforcing fiber (A). On the other hand, coating refers to a method in which the reinforcing fiber (A) is coated with the modifying agent (C) using a coating technique such as reverse roll coating, transfer roll coating, kiss roll coating, sprayer coating, and curtain coating. In a method using reverse roll coating, transfer roll coating, or kiss roll coating, the modifying agent (C) in a molten state is supplied by a pump to rolls to coat the reinforcing fiber (A) with the modifying agent (C) in a molten state. Furthermore, reverse roll coating uses two rolls rotating in opposite directions to apply the modifying agent (C) that is in a molten state and is spread over the rolls, while transfer roll coating uses two rolls rotating in the same direction to apply the modifying agent (C) that is in a molten state and is spread over the rolls. In general, when performing reverse roll coating or transfer roll coating, the reinforcing fiber (A) are passed between rolls and additional rolls are provided to ensure firm adhesion of the modifying agent (C). In the case of kiss roll coating, on the other hand, the reinforcing fiber (A) is in contact only with a roll to apply the modifying agent (C). Therefore, kiss roll coating should preferably be used in the case where the viscosity is relatively low, but in any of these coating methods, an appropriate amount of the modifying agent (C) can be applied after being melted by heating while the reinforcing fiber (A) is maintained in contact with it as it travels so that an appropriate amount of the modifying agent (C) is adhered per unit length of the fiber. Spray coating uses the principle of spraying to atomize the modifying agent (C) in a molten state and apply it to the reinforcing fiber (A), while in the curtain coating method, the modifying agent (C) in a molten state is applied by allowing it to drop naturally from small holes or overflow from a melting bath. The coating rate can be controlled easily and the loss of the modifying agent (C) can be reduced.

Here, the melting temperature (temperature in the melting bath) during the supply of the modifying agent (C) is preferably 100°C to 300°C. If the melting temperature is 100°C or more, the viscosity of the modifying agent (C) can be maintained at a moderate level, thereby reducing uneven adhesion, and it is more preferably 150°C or more. On the other hand, if the melting temperature is 300°C or less, heat decomposition of the modifying agent (C) can be depressed even when production is continued for a long time. It is more preferably 250°C or less. If it is in a molten state at 100°C to 300°C while in contact with the reinforcing fiber (A), it allows the modifying agent (C) to be supplied stably.

Described next will be the step for heating the reinforcing fiber (A) having the modifying agent (C) adhered thereto that results from the step (I) to implement its impregnation (step (II)). Specifically, this step is designed to allow the modifying agent (C) to penetrate into the interior of the reinforcing fiber (A) to impregnate it, which is effected by applying tension with rolls or bars, repeatedly widening and squeezing, or applying pressure or vibration, etc., to the reinforcing fiber (A) having the modifying agent (C) adhered thereto at a temperature where the modifying agent (C) melts. As a more specific example, a good method is to widen the reinforcing fiber (A) by running it while maintaining it in contact with the surfaces of multiple heated rolls or bars, and in particular, the use of a squeezing nozzle, squeezing roll, roll press, or double belt press is preferable to implement impregnation. Here, a squeezing nozzle refers to a nozzle that narrows in the direction of travel of the fiber, and it works to accelerate impregnation while squeezing the reinforcing fiber (A) and scraping off excess portions of the modifying agent (C) adhered thereto. In the case of a squeezing roll, furthermore, tension is applied by a roller to the reinforcing fiber (A) so that impregnation is accelerated while scraping off excess portions of the modifying agent (C) adhered thereto. In addition, a roll press is a device that is designed to continuously remove air from inside the reinforcing fiber (A) under a pressure caused between two rolls to implement impregnation, and a double belt press is a device that is designed to use belts to apply pressure to the reinforcing fiber (A) from above and below in order to implement impregnation.

In the step (II), furthermore, it is preferable that 80 to 100 mass% of the supplied amount of the modifying agent (C) is involved in impregnating the reinforcing fiber (A). From an economy and productivity point of view, the volume of the resin consumed for impregnation relative to that supplied is preferably as high as possible because it has a direct influence on the yield. The proportion is more preferably 85 to 100 mass%, and still more preferably 90 to 100 mass%. If it is 80 mass% or more, furthermore, it serves in the step (II) not only to improve economy features but also to suppress the generation of volatile components from the modifying agent (C) and reduce the formation of voids inside the fiber bundle.

In the step (II), it is also preferable that the maximum temperature of the modifying agent (C) be 150°C to 400°C. In the case where the maximum temperature is 150°C or more, it is more preferably 180°C or more, and still more preferably 200°C or more. On the other hand, if the maximum temperature is 400°C or less, it serves to suppress undesired side reactions such as decomposition reaction of the modifying agent (C). It is more preferably 380°C or less, and still more preferably 350°C or less.

There are no particular limitations on the method to use for heating in the step (II), but specific examples include the use of a heated chamber and the use of hot rollers to perform heating and pressurizing simultaneously.

Furthermore, from the viewpoint of suppressing undesired side reactions such as crosslinking and decomposition of the modifying agent (C), it is preferable to perform heating in a non-oxidizing atmosphere. Here, a non-oxidizing atmosphere is an atmosphere that has an oxygen concentration of 5 vol% or less, preferably 2 vol% or less, and is still more preferably an oxygen-free atmosphere, i.e., an atmosphere of an inert gas such as nitrogen, helium, argon, etc. In particular, from an economy and handleability point of view, a nitrogen atmosphere is preferable.

In addition, the bundle of the reinforcing fiber (A) may be opened at a previous stage preceding the steps (I) and (II). Fiber opening is the operation of separating the filaments combined in a reinforcing fiber bundle, and this is expected to serve for further enhancing the impregnability with the modifying agent (C). Fiber opening works to decrease the thickness of the reinforcing fiber bundle, and it is preferable that the opening ratio is 2.0 or more, more preferably 2.5 or more, which is calculated as (b2/a2) / (b1/a1) where b1 (mm) and a1 ($\mu$m) are the width and the thickness, respectively, of the reinforcing fiber bundle before opening and b2 (mm) and a2 ($\mu$m) are the width and the thickness, respectively, of the reinforcing fiber bundle after opening.

There are no specific limitations on the method to use for opening the reinforcing fiber bundle, and it can be effected by, for example, the method of passing it on concave and convex rolls alternately, the method of using drum shaped rolls, the method of applying tension fluctuation to vibrations in the axial direction, the method of using two reciprocating friction blocks moving in the vertical direction and varying the tension caused by them on the reinforcing fiber bundle, and the method of blowing air against the reinforcing fiber bundle.

A molding material can be produced by coating such a fiber bundle with the polyamide resin (B) with a melting point of 210°C or less or a resin composition containing at least the polyamide resin (B) with a melting point of 210°C or less.

Alternatively, a molding material mixture may be produced by dry-blending a molding material prepared by coating a fiber bundle obtained as described above with the polyamide resin (B) with a melting point of 210°C or less, and pellets prepared by melt-kneading the polyamide resin (B) with a melting point of 210°C or less. In this case, the content of the reinforcing fiber (A) in the molded article can be adjusted easily. Alternatively, a molding material mixture in the form of a pellet blend may be produced by a process in which a molding material prepared by coating a composite body including carbon fiber and the modifying agent (C) with the polyamide resin (B) with a melting point of 210°C or less is blended with a molding material prepared by coating a composite body including organic fiber or glass fiber and the modifying agent (C) with the polyamide resin (B) with a melting point of 210°C or less. Here, dry blending refers to, unlike melt-kneading, stirring and mixing multiple substances at a temperature where the resin components do not melt to achieve a substantially uniform state, and this is adopted preferably for injection molding, extrusion molding, etc., where a pellet shaped molding material is to be used.

It is preferable for such a molding material mixture to include a fiber reinforced thermoplastic resin molding material (X) (occasionally referred to as "fiber reinforced molding material") that contains the reinforcing fiber (A), the polyamide resin (B) with a melting point of 210°C or less, and the aforementioned modifying agent (C), and a thermoplastic resin molding material (Y) (occasionally referred to as "thermoplastic resin molding material") that contains at least the polyamide resin (B) with a melting point of 210°C or less and the aforementioned modifying agent (C). It is preferable that the fiber reinforced molding material (X) have a structure that contains a composite body produced by impregnating a reinforcing fiber with the aforementioned modifying agent (C) and also contains the polyamide resin (B) with a melting point of 210°C or less located on the outside of the composite body, and it is also preferable that the length of the reinforcing fiber be substantially equal to the length of the fiber reinforced thermoplastic resin molding material. Here, the modifying agent (C) used in the aforementioned fiber reinforced molding material and that used in the aforementioned thermoplastic resin molding material may be either identical to or different from each other.

The molded article according to the present invention is a fiber reinforced thermoplastic resin molded article having good mechanical characteristics, particularly in terms of bending elastic modulus, appearance quality, dimensional accuracy, and in particular warpage suppression property, and the molded article according to the present invention is highly useful for such applications as electrical and electronic devices, home appliances, casings, automobile components, and components of sports goods. Suitable casings and components of electrical and electronic devices include casings of electronic devices such as computers, televisions, video players, DVD players, cameras, and audio equipment, and electronic components such as those for connectors, speakers, microphones, headphones, small motors, and computer related parts. Suitable home appliances include VTR parts, TV parts, irons, hair driers, rice cooker parts, microwave oven parts, audio equipment parts, parts for audio/video devices such as audio devices, laser disk (registered trademark), compact disc, and DVD, lighting parts, refrigerator parts, air conditioner parts, typewriter parts, word processor parts. In addition, suitable optical devices and precision machinery related parts include office computer related parts, telephone related parts, facsimile related parts, copier related parts, binoculars, cameras, and clocks. Suitable automobile parts and vehicle related parts include door pads, pillars, console boxes, various motor housings, roof rails, fenders, garnishes, bumpers, door panels, roof panels, hood panels, trunk lids, door mirror stays, spoilers, hood louvers, wheel covers, wheel caps, grill apron cover frames, lamp bezels, door handles, door moldings, rear finishers, and wipers. The molded article according to the present invention can also be used suitably for sports goods including, for example, bicycle pedal related products; golf related products such as golf clubs, shafts, grips, and golf balls; racket sports related products such as tennis rackets, tennis balls, badminton rackets and their strings, and badminton shuttles; sports related protection products such as masks, helmets, chest protectors, elbow pads, and knee pads for American football, baseball, softball, and other sports; fishing gear related products such as fishing rods, reels, and lures; summer sports related products such as for surfing; winter sports related products such as for skiing and snowboarding; and other indoor and outdoor sports related products.

EXAMPLES

The present invention is described in more detail below with reference to examples, but the invention should not be construed as being limited thereto. First, the various characteristics evaluation methods used in the examples are described. One measurement (n = 1) is used for an evaluation unless otherwise specified.

<Evaluation methods>

(1) Measurement of thermal conductivity in the fiber axis direction of reinforcing fiber

The thermal conductivity in the fiber axis direction of a reinforcing fiber was determined by extracting a piece of the reinforcing fiber by burning a molded article at 400°C in an electric furnace to remove the resin components and making a calculation by the following formula that shows a correlation between thermal conductivity and electrical resistivity of the reinforcing fiber.

$$K = 1272.4 / ER - 49.4$$

In the formula, K is the thermal conductivity in the fiber axis direction of carbon fiber [W/mK], and ER is the electrical resistivity in the fiber axis direction of carbon fiber [$\mu\Omega$m]. Here, electrical resistivity can be determined by extracting a piece of the reinforcing fiber from the molded article, stretching it straight along the centerline of a base paper, fixing it at two points with a conductive paint in such a manner that the test length is equal to the length of the hole in the base paper to prepare a test piece, measuring the resistance value of the test piece using a resistance measuring device, and making a calculation by the formula given below.

$$ER = (\pi \times Df^2 \times Rf) / (4 \times Lf \times 10^3)$$

In the formula, Rf is the resistance value ($\Omega$) of the test piece; Df is the diameter of the reinforcing fiber ($\mu$m); and Lf is the test length (mm). Here, the diameter of the reinforcing fiber was determined by the method specified as the method B in JIS R7607:2000, and the test length was measured from the test piece attached to the base paper. Resistance was measured from three test pieces and the average of the measurements was used.

(2) Weight average fiber length

A test piece was cut out from a molded article and put in HFIP, and then it was heated as appropriate to prepare a solution in which the reinforcing fiber (A) was dispersed uniformly. Subsequently, this solution was cast onto a quantitative filter paper (model No.5C, manufactured by Advantec Co., Ltd.) and the solution was evaporated, followed by observing the reinforcing fiber (A) dispersed on the filter paper under an optical microscope (at a magnification of 50 to 200) in the same way as described above. The fiber lengths of 1,000 randomly selected filaments of the reinforcing fiber (A) were measured, and the weight average fiber length (Lw) was calculated by the formula given below.

$$\text{Weight average fiber length} = \Sigma(Mi^2 \times Ni) / \Sigma(Mi \times Ni)$$

Mi: Fiber length (mm)
Ni: Number of fibers with fiber length Mi

(3) Measurement of water absorption rate of polyamide resin (B) with a melting point of 210°C or less

The polyamide resin (B) to be used in each example and comparative example was dried for 24 hours in a vacuum drying machine set at 80°C and then cooled in the vacuum drying machine. After that, pellets were transferred quickly from the vacuum drying machine into an aluminum cup, weighed to determine their mass, left to stand for 24 hours in a constant temperature chamber maintained at 23°C and a humidity of 65% RH, and then weighed again to determine their mass, followed by calculating the water absorption rate between before and after water absorption.

(4) Measurement of surface smoothness (surface roughness Rz) of molded article

An ISO type dumbbell test piece was prepared by injection molding of a molding material and the surface originally in contact with the mirror surface of the mold was examined by a surface roughness measuring instrument (surface roughness tester manufactured by Tokyo Seimitsu Co., Ltd.) to determine the value of Rz. A smaller Rz value means a smaller surface roughness and indicates a smoother surface. For the surface smoothness evaluation of a molded article, measurement was conducted five times for each sample and the average of the measurements was adopted.

(5) Measurement of bending elastic modulus of molded article

Each of the ISO type dumbbell test pieces prepared in the examples and comparative examples was examined according to ISO 178:2019 using a three point bending test tool (indenter radius 5 mm) set to a fulcrum distance of 64 mm, and its bending elastic modulus was measured under appropriate test conditions including a test speed of 2 mm/min. Instron (registered trademark) 5566 universal testing machine (manufactured by Instron Corporation) was used as testing machine. For the bending elastic modulus evaluation of a molded article, measurement was conducted five times for each sample and the average of the measurements was adopted.

(6) Dimensional evaluation (warpage evaluation) of molded article

A test piece with a size of 80 mm × 80 mm × 1 mm (thickness) was prepared in each example and comparative example, and an evaluation was made based on the difference ($t_2 - t_1$) between the height ($t_1$) of the central part of the test piece viewed from the side and the height ($t_2$) of the edge part viewed from the side. Measurement was conducted once for each test piece and three measurements were taken, followed by calculating the average and using it for evaluation in each example and comparative example. Evaluations were made according to the following criteria and each sample was judged to be acceptable if rated as A or B.
A: ($t_2 - t_1$) is less than 3 mm.
B: ($t_2 - t_1$) is less than 5 mm.
C: ($t_2 - t_1$) is 5 mm or more.

(7) Appearance evaluation (fiber dispersion evaluation) of molded article

A test piece with a size of 80 mm × 80 mm × 1 mm (thickness) was prepared in each example and comparative example, and the number of non-dispersion reinforcing fiber bundles present on each side of the test piece was counted visually. Here, a reinforcing fiber bundle is judged to be non-dispersion if 100 or more reinforcing fibers having the same length are found to be grouped together in it. For the evaluation, 50 molded article test pieces were examined, and the total number of such bundles was used to rate them in terms of fiber dispersion according to the following criteria, with A and B being considered passing grades.
A: Less than 1 non-dispersion reinforcing fiber bundle
B: 1 or more non-dispersion reinforcing fiber bundles
C: 2 or more non-dispersion reinforcing fiber bundles

<Materials used>

(1) Reinforcing fiber [A]

(A-1)
PAN based carbon fiber Torayca (registered trademark) T700S-12K (manufactured by Toray Industries, Inc., thermal conductivity in fiber axis direction 10 W/mK) was used.
(A-2)
PAN based carbon fiber Torayca (registered trademark) M40J-6K (manufactured by Toray Industries, Inc., thermal conductivity in fiber axis direction 80 W/mK) was used.

(A-3)

Pitch based carbon fiber Dialead (registered trademark) K1352U (manufactured by Mitsubishi Chemical Corporation, thermal conductivity in fiber axis direction 140 W/mK) was used.

(A-4)

Glass fiber roving ER2220 (manufactured by Asahi Fiber, thermal conductivity in fiber axis direction 1 W/mK) was used.

(A-5)

PAN based carbon fiber Torayca (registered trademark) T800S-24K (manufactured by Toray Industries, Inc., thermal conductivity in fiber axis direction 12 W/mK) was used.

It should be noted that (A-1) to (A-3) and (A-5) can serve as the reinforced fiber (A) for the present invention, while (A-4) cannot serve as the reinforced fiber (A) for the present invention.

(2) Polyamide resin [B]

(B-1)

Polyamide resin (manufactured by Daicel-Evonik Ltd., Nylon 1010 resin Vestamid (registered trademark) Terra BS1393, melting point 205°C, water absorption rate 1.3% at 65% RH) was used.

(B-2)

Polyamide resin (manufactured by Arkema Ltd., Nylon 11 resin Rilsan (registered trademark) BMN O, melting point 185°C, water absorption rate 1.1% at 65% RH) was used.

(B-3)

Polyamide resin (manufactured by Arkema Ltd., Nylon 12 resin Rilsamid (registered trademark) AMN OCM2001, melting point 175°C, water absorption rate 1.0% at 65% RH) was used.

(B-4)

Polyamide resin (manufactured by Toray Industries Inc., Nylon 610 resin Amilan (registered trademark) CM2001, melting point 225°C, water absorption rate 1.6% at 65% RH) was used.

(B-5)

Pellet blend of a polyamide resin (manufactured by Toray Industries, Inc., Nylon 610 resin Amilan (registered trademark) CM2001, melting point 225°C, water absorption rate 1.6% at 65% RH) and another polyamide resin (manufactured by Mitsubishi Gas Chemical Co., Inc., Nylon MXD6 (S6007), melting point 240°C, water absorption rate 3.0% at 65% RH) mixed at a ratio of 80:20 was used. The pellet blend resin had a melting point of 230°C and a water absorption rate of 1.9% at 65% RH.

It should be noted that (B-1) to (B-3) can serve as the polyamide resin (B) with a melting point of 210°C or less for the present invention, while (B-4) and (B-5) cannot serve as the polyamide resin (B) with a melting point of 210°C or less for the present invention.

(3) Modifying agent [C]

(C-1)

A solid bisphenol A type epoxy resin (manufactured by Mitsubishi Chemical Corporation, jER1004AF, softening point 97°C) was used.

(C-2)

A solid hydrogenated terpene resin (manufactured by Yasuhara Chemical Co., Ltd., Clearon (registered trademark) P125, softening point 125°C) was used.

(C-3)

A solid terpene phenol resin (manufactured by Yasuhara Chemical Co., Ltd., Mighty Ace (registered trademark) K125, softening point 125°C) was used.

It should be noted that (C-1) to (C-3) can all serve as the modifying agent [C] for the present invention.

(Example 1)

In a long fiber reinforced resin pellet production machine having a twin screw extruder (TEX-30α, manufactured by Japan Steel Works, Ltd., screw diameter 30 mm, L/D = 32) equipped with a coating die designed for resin coating, in which the extruder cylinder temperature was set to 230°C, a polyamide resin (B-1) with a melting point of 210°C or less was fed from the main hopper and melt-kneaded at a screw rotation speed of 200 rpm. A modifying agent (C-1) that was heated and melted at 200°C was discharged at a discharge rate adjusted to provide a molded article in which it would account for 6 parts by mass whereas all components from the reinforcing fiber [A] to the modifying agent [C] would altogether account for 100 parts by mass, and then it was combined with a fiber bundle of the carbon fiber (A-1) to impregnate it. The fiber bundle of the carbon fiber (A-1) combined with the modifying agent (C-1) was supplied to the die mouth (diameter 3 mm) from which the polyamide resin (B-1) with a melting point of 210°C or less in a molten state was being discharged, thereby allowing the outer side of the carbon fiber (A-1) to be continuously covered with the polyamide resin (B-1). At this time, in the inner cross section of the fiber bundle, at least a part of the carbon fiber (A-1) was in contact with the polyamide resin (B-1) with a melting point of 210°C. After cooling the resulting strand, it was cut to a pellet length of 7 mm with a cutter to provide long fiber pellets. In this step, the take-up speed was adjusted in such a manner that the carbon fiber (A-1) would account for 30 parts by mass whereas all components from the reinforcing fiber [A] to the modifying agent [C] would altogether account for 100 parts by mass. The length of the carbon fiber (A-1) in the resulting long fiber pellets was substantially equal to the length of the pellets.

Using an injection molding machine (J110AD, manufactured by Japan Steel Works, Ltd.), the long fiber pellets thus obtained were injection-molded under the conditions of an injection time of 2 seconds, a back pressure of 5 MPa, a dwell pressure of 40 MPa, a dwell time of 10 seconds, a cylinder temperature of 230°C, and a mold temperature of 60°C to provide, as molded articles, an ISO type dumbbell test piece and other test pieces with a size of 80 mm × 80 mm × 1 mm (thickness) for warpage evaluation and dispersion evaluation. Here, the cylinder temperature means the temperature of the portion of the injection molding machine where the molding material is heated and melted, and the mold temperature means the temperature of the mold in which the resin to be shaped to a desired shape is injected. The resulting test pieces (molded articles) were left to stand for 24 hours in a constant-temperature constant-humidity chamber adjusted to a temperature of 23°C and a humidity of 50% RH before being subjected to characteristics evaluation. Results of evaluation performed by the aforementioned methods are summarized in Table 1. The content of each material used here refers to its proportion to the molded article that contains it. (The same applies also to Examples, Comparative examples, and Tables 2 to 4, which will be given later.)

(Examples 2 to 27)

Except that the content of each material in the molded articles and the components from the reinforcing fiber [A] to the modifying agent [C] used therein were changed as listed in Tables 1 to 3, the same procedure as in Example 1 was carried out to produce molded articles, followed by their evaluation. The results of the evaluations are summarized in Tables 1 to 3.

(Examples 28 to 30)

Except that the content of each material in the molded articles and the components from the reinforcing fiber [A] to the modifying agent [C] used therein were changed as listed in Table 3, the same procedure as in Example 1 was carried out to produce molded articles, followed by their evaluation. The results of the evaluations are summarized in Table 3.

(Comparative examples 1 to 7)

Except that the content of each material in the molded articles and the components from the reinforcing fiber [A] to the modifying agent [C] used therein were changed as listed in Table 4, the same procedure as in Example 1 was carried out to produce molded articles, followed by their evaluation. The results of the evaluations are summarized in Table 4.

(Comparative example 8)

Except that the back pressure used in injection molding was changed to 40 MPa, the same procedure as in Example 1 was carried out to produce a molded article, followed by its evaluation. The results of the evaluation are summarized in Table 4.

(Comparative example 9)

Except that the back pressure during injection molding was changed to 1 MPa, the same procedure as in Example 1 was carried out to produce a molded article, followed by its evaluation. The results of the evaluation are summarized in Table 4.

For the molded articles produced in Examples 1 to 3, the reinforcing fiber (A) was highly dispersed in each molded article, and they all had good mechanical characteristics, particularly in terms of bending elastic modulus, appearance quality, and dimensional accuracy, and in particular, showed little warpage. Similar results were obtained in Examples 4 to 6 and 25 to 30 where the reinforcing fiber [A] was changed within the range in which it can serve as the reinforcing fiber (A). Also, in Examples 7 to 24 where the polyamide resin [B] was changed within the range in which it can serve as the polyamide resin (B) with a melting point of 210°C or less, the reinforcing fiber (A) was highly dispersed in each molded article, and all molded articles had good mechanical characteristics, particularly in terms of bending elastic modulus, appearance quality, and dimensional accuracy, and in particular, showed little warpage.

In Comparative example 1, the reinforcing fiber (A) was not contained, and therefore, there was little fiber reinforcing effect, resulting in a low bending elastic modulus and an increased warpage. In Comparative example 2, an excessive amount of the reinforcing fiber (A) was contained, and therefore, reinforcing fiber filaments were entangled with each other, leading to insufficient dispersion of the reinforcing fiber (A) in the molded article and resulting in an increased warpage. In Comparative example 3, a reinforcing fiber having a lower thermal conductivity in the fiber axis direction was used, and therefore, it caused a cooling gradient between the interior region and the surface region of the resulting molded article, leading to an increased warpage. In Comparative examples 4 and 5, polyamide resins with high melting points, which cannot serve as the polyamide resin (B) with a melting point of 210°C or less, were used, and therefore, it caused a cooling gradient between the interior region and the surface region of the resulting molded article, leading to an increased warpage. In Comparative example 6, the modifying agent (C) was not contained, and therefore, the wettability between the reinforcing fiber and the polyamide resin was insufficient, leading to poor dispersion of the reinforcing fiber (A) in the resulting molded article and resulting in a decline in appearance quality and dimensional accuracy, and an increased warpage in particular. In Comparative example 7, an excessive amount of a modifying agent was contained, and therefore, it caused a decrease in the elastic modulus of the polyamide resin, leading to a molded article with an inferior bending elastic modulus. In Comparative example 8, the reinforcing fiber had a short weight average fiber length, and therefore, there was little fiber reinforcing effect, leading to a molded article with an increased warpage. In Comparative example 9, the weight average fiber length was too long, and therefore, the surface roughness of the molded article was so large that the diffusion of heat from the interior of the molded article to the surface layer of the molded article was hindered, leading to a cooling gradient between the interior and the surface region of the molded article and resulting in an increased warpage.

[Table 1]

[Table 1]

| | | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|
| material used | reinforcing fiber [A] | content | parts by mass | 30.0 | 30.0 | 30.0 | 30.0 | 30.0 | 30.0 | 30.0 | 30.0 | 30.0 | 20.0 | 20.0 | 20.0 |
| | | type | - | (A-1) | (A-1) | (A-1) | (A-2) | (A-2) | (A-2) | (A-1) | (A-1) | (A-1) | (A-1) | (A-1) | (A-1) |
| | | thermal conductivity | W/mK | 10.0 | 10.0 | 10.0 | 80.0 | 80.0 | 80.0 | 10.0 | 10.0 | 10.0 | 10.0 | 10.0 | 10.0 |
| | polyamide resin [B] | type | - | (B-1) | (B-1) | (B-1) | (B-1) | (B-1) | (B-1) | (B-2) | (B-2) | (B-2) | (B-2) | (B-2) | (B-2) |
| | | water absorption rate (23°C ×65% RH) | % | 1.3 | 1.3 | 1.3 | 1.3 | 1.3 | 1.3 | 1.1 | 1.1 | 1.1 | 1.1 | 1.1 | 1.1 |
| | | melting point | °C | 205.0 | 205.0 | 205.0 | 205.0 | 205.0 | 205.0 | 185.0 | 185.0 | 185.0 | 185.0 | 185.0 | 185.0 |
| | | content | parts by mass | 64.0 | 64.0 | 64.0 | 64.0 | 64.0 | 64.0 | 64.0 | 64.0 | 64.0 | 76.0 | 76.0 | 76.0 |
| | modifying agent [C] | type | - | (C-1) | (C-2) | (C-3) | (C-1) | (C-2) | (C-3) | (C-1) | (C-2) | (C-3) | (C-1) | (C-2) | (C-3) |
| | | content | parts by mass | 6.0 | 6.0 | 6.0 | 6.0 | 6.0 | 6.0 | 6.0 | 6.0 | 6.0 | 4.0 | 4.0 | 4.0 |
| molded article | weight average fiber length | $Lw_{a1}$ | mm | 0.7 | 0.7 | 0.7 | 0.4 | 0.4 | 0.4 | 0.8 | 0.8 | 0.8 | 0.9 | 0.9 | 0.9 |
| | surface roughness | Rz | μm | 4.0 | 4.0 | 4.0 | 4.5 | 4.5 | 4.5 | 3.5 | 3.5 | 3.0 | 3.5 | 3.5 | 3.0 |
| evaluation results | bending elastic modulus | | GPa | 19.0 | 19.0 | 19.0 | 27.0 | 27.0 | 27.0 | 20.0 | 20.0 | 20.0 | 15.0 | 15.0 | 15.0 |
| | fiber dispersibility | | - | B | B | A | B | B | B | B | B | A | B | B | A |
| | warpage | | mm | B | B | B | B | B | B | A | A | A | A | A | A |

[Table 2]

[Table 2]

| | | | | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|---|---|
| material used | reinforcing fiber [A] | content | parts by mass | 10.0 | 10.0 | 10.0 | 30.0 | 30.0 | 30.0 | 20.0 | 20.0 | 20.0 | 10.0 | 10.0 | 10.0 |
| | | type | - | (A-1) | (A-1) | (A-1) | (A-1) | (A-1) | (A-1) | (A-1) | (A-1) | (A-1) | (A-1) | (A-1) | (A-1) |
| | | thermal conductivity | W/mK | 10.0 | 10.0 | 10.0 | 10.0 | 10.0 | 10.0 | 10.0 | 10.0 | 10.0 | 10.0 | 10.0 | 10.0 |
| | polyamide resin [B] | type | - | (B-2) | (B-2) | (B-2) | (B-3) | (B-3) | (B-3) | (B-3) | (B-3) | (B-3) | (B-3) | (B-3) | (B-3) |
| | | water absorption rate (23°C ×65% RH) | % | 1.1 | 1.1 | 1.1 | 1.0 | 1.0 | 1.0 | 1.0 | 1.0 | 1.0 | 1.0 | 1.0 | 1.0 |
| | | melting point | °C | 185.0 | 185.0 | 185.0 | 175.0 | 175.0 | 175.0 | 175.0 | 175.0 | 175.0 | 175.0 | 175.0 | 175.0 |
| | | content | parts by mass | 88.0 | 88.0 | 88.0 | 64.0 | 64.0 | 64.0 | 74.0 | 74.0 | 74.0 | 88.0 | 88.0 | 88.0 |
| | modifying agent [C] | type | - | (C-1) | (C-2) | (C-3) | (C-1) | (C-2) | (C-3) | (C-1) | (C-2) | (C-3) | (C-1) | (C-2) | (C-3) |
| | | content | parts by mass | 2.0 | 2.0 | 2.0 | 6.0 | 6.0 | 6.0 | 4.0 | 4.0 | 4.0 | 2.0 | 2.0 | 2.0 |
| molded article | weight average fiber length | $Lw_{a1}$ | mm | 1.2 | 1.2 | 1.2 | 0.8 | 0.8 | 0.8 | 0.9 | 0.9 | 0.9 | 1.2 | 1.2 | 1.2 |
| | surface roughness | Rz | μm | 3.0 | 3.0 | 2.5 | 3.5 | 3.5 | 3.0 | 3.5 | 3.5 | 3.0 | 3.0 | 3.0 | 2.5 |
| evaluation results | bending elastic modulus | | GPa | 11.0 | 11.0 | 11.0 | 20.0 | 20.0 | 20.0 | 15.0 | 15.0 | 15.0 | 11.0 | 11.0 | 11.0 |
| | fiber dispersibility | | - | B | B | A | B | B | A | B | B | A | B | B | A |
| | warpage | | mm | A | A | A | A | A | A | A | A | A | A | A | A |

[Table 3]

[Table 3]

| | | | | Example 25 | Example 26 | Example 27 | Example 28 | Example 29 | Example 30 |
|---|---|---|---|---|---|---|---|---|---|
| material used | reinforcing fiber [A] | content | parts by mass | 30.0 | 30.0 | 30.0 | 30.0 | 20.0 | 10.0 |
| | | type | - | (A-3) | (A-3) | (A-3) | (A-5) | (A-5) | (A-5) |
| | | thermal conductivity | W/mK | 140.0 | 140.0 | 140.0 | 12.0 | 12.0 | 12.0 |
| | polyamide resin [B] | type | - | (B-3) | (B-3) | (B-3) | (B-2) | (B-2) | (B-2) |
| | | water absorption rate (23°C ×65% RH) | % | 1.0 | 1.0 | 1.0 | 1.1 | 1.1 | 1.1 |
| | | melting point | °C | 175.0 | 175.0 | 175.0 | 185.0 | 185.0 | 185.0 |
| | | content | parts by mass | 64.0 | 64.0 | 64.0 | 64.0 | 76.0 | 88.0 |
| | modifying agent [C] | type | - | (C-1) | (C-2) | (C-3) | (C-3) | (C-3) | (C-3) |
| | | content | parts by mass | 6.0 | 6.0 | 6.0 | 6.0 | 4.0 | 2.0 |
| molded article | weight average fiber length | $Lw_{a1}$ | mm | 0.4 | 0.4 | 0.4 | 0.7 | 0.8 | 1.0 |
| | surface roughness | Rz | μm | 6.0 | 6.0 | 6.0 | 2.7 | 2.7 | 2.3 |
| evaluation results | bending elastic modulus | | GPa | 35.0 | 35.0 | 35.0 | 25.0 | 19.0 | 15.0 |
| | fiber dispersibility | | - | B | B | B | A | A | A |
| | warpage | | mm | B | B | B | A | A | A |

[Table 4]

[Table 4]

| material used | | | Comparative example 1 | Comparative example 2 | Comparative example 3 | Comparative example 4 | Comparative example 5 | Comparative example 6 | Comparative example 7 | Comparative example 8 | Comparative example 9 |
|---|---|---|---|---|---|---|---|---|---|---|---|
| reinforcing fiber [A] | content | parts by mass | - | 40.0 | 30.0 | 30.0 | 30.0 | 30.0 | 30.0 | 30.0 | 30.0 |
| | type | - | - | (A-1) | (A-4) | (A-1) | (A-1) | (A-1) | (A-1) | (A-1) | (A-1) |
| | thermal conductivity | W/mK | - | 10.0 | 1.0 | 10.0 | 10.0 | 10.0 | 10.0 | 10.0 | 10.0 |
| polyamide resin [B] | type | - | (B-3) | (B-3) | (B-3) | (B-4) | (B-5) | (B-3) | (B-3) | (B-3) | (B-3) |
| | water absorption rate (23°C ×65% RH) | % | 1.0 | 1.0 | 1.0 | 1.6 | 1.9 | 1.0 | 1.0 | 1.0 | 1.0 |
| | melting point | °C | 175.0 | 175.0 | 175.0 | 225.0 | 230.0 | 175.0 | 175.0 | 175.0 | 175.0 |
| | content | parts by mass | 94.0 | 52.0 | 64.0 | 64.0 | 64.0 | 70.0 | 55.0 | 64.0 | 64.0 |
| modifying agent [C] | type | - | (C-3) | (C-3) | (C-3) | (C-3) | (C-3) | - | (C-3) | (C-3) | (C-3) |
| | content | parts by mass | 6.0 | 8.0 | 6.0 | 6.0 | 6.0 | - | 15.0 | 6.0 | 6.0 |
| molded article | weight average fiber length $Lw_{a1}$ | mm | - | 0.5 | 1.9 | 0.8 | 0.9 | 1.2 | 1.3 | 0.2 | 2.0 |
| | surface roughness $Rz$ | μm | 1.0 | 7.0 | 3.5 | 5.5 | 5.5 | 6.5 | 3.0 | 2.5 | 5.5 |
| evaluation results | bending elastic modulus | GPa | 1.4 | 25.0 | 18.0 | 21.0 | 21.0 | 18.0 | 11.0 | 20.0 | 20.0 |
| | fiber dispersibility | - | A | B | B | B | B | C | A | A | C |
| | warpage | mm | C | C | C | C | C | C | A | C | C |

25

INDUSTRIAL APPLICABILITY

The fiber reinforced thermoplastic resin molded article according to the present invention has a high bending elastic modulus, appearance quality, dimensional accuracy, and in particular warpage suppression property, and therefore it can be used suitably for the production of electrical and electronic devices, office automation equipment, home appliances, casings, sports goods, automobile parts, and the like.

EXPLANATION OF NUMERALS

1    Reinforcing fiber (A)
2    Polyamide resin (B)
3    Modifying agent (C)
4    Composite body

**Claims**

1.  A fiber reinforced thermoplastic resin molded article comprising a reinforcing fiber (A) having a weight average fiber length of 0.4 mm or more and 1.5 mm or less and a thermal conductivity in the fiber axis direction of 5 W/mK or more, a polyamide resin (B) with a melting point of 210°C or less used as matrix resin, and a modifying agent (C), wherein the reinforcing fibers (A) accounts for 10 parts by mass or more and 30 parts by mass or less, the polyamide resin (B) accounting for 60 parts by mass or more and 89 parts by mass or less, and the modifying agent (C) accounting for 1 part by mass or more and 10 parts by mass or less, with the components (A) to (C) altogether accounting for 100 parts by mass.

2.  A fiber reinforced thermoplastic resin molded article as set forth in claim 1, wherein the reinforcing fiber (A) is carbon fiber or metal fiber.

3.  A fiber reinforced thermoplastic resin molded article as set forth in either claim 1 or 2, wherein the polyamide resin (B) has a water absorption rate (at 23°C and 65% RH) of 1.5% or less.

4.  A fiber reinforced thermoplastic resin molded article as set forth in either claim 1 or 2, wherein the surface roughness (Rz: maximum height) of the molded article is 5.0 $\mu$m or less.

5.  A fiber reinforced thermoplastic resin molded article as set forth in either claim 1 or 2, wherein the polyamide resin (B) contains at least one polyamide resin selected from the group consisting of polyamides 1010, 1012, 11, and 12.

6.  A fiber reinforced thermoplastic resin molded article as set forth in either claim 1 or 2, wherein the modifying agent (C) contains at least one selected from the group consisting of terpene resin, terpene phenol resin, and epoxy resin.

[Fig. 1]

[Fig. 2]

[Fig. 3]

[Fig. 4]

## INTERNATIONAL SEARCH REPORT

| International application No. |
| --- |
| **PCT/JP2022/037398** |

**A.    CLASSIFICATION OF SUBJECT MATTER**

*C08L 77/00*(2006.01)i; *C08J 5/04*(2006.01)i; *C08K 3/04*(2006.01)i; *C08K 3/08*(2006.01)i; *C08K 7/04*(2006.01)i;
*C08L 63/00*(2006.01)i; *C08L 93/00*(2006.01)i
FI:    C08L77/00; C08J5/04; C08K3/04; C08K3/08; C08K7/04; C08L63/00; C08L93/00

According to International Patent Classification (IPC) or to both national classification and IPC

**B.    FIELDS SEARCHED**

Minimum documentation searched (classification system followed by classification symbols)

C08L77/00; C08J5/04; C08K3/04; C08K3/08; C08K7/04; C08L63/00; C08L93/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2021/106714 A1 (TORAY INDUSTRIES) 03 June 2021 (2021-06-03)<br>    claims, paragraphs [0025]-[0029], [0040], [0080]-[0096], examples | 1-6 |
| A | 山本巌, ピッチ系炭素繊維, 繊維学会誌, 10 May 1993, vol. 49, no. 5, pp. 168-172<br>    p. 171, (YAMAMOTO, Iwao. Pitch Based Carbon Fiber. Journal of the Society of Fiber<br>    Science and Technology, Japan.) | 1-6 |
| A | WO 2019/031288 A1 (TORAY INDUSTRIES) 14 February 2019 (2019-02-14)<br>    entire text, all drawings | 1-6 |

☐ Further documents are listed in the continuation of Box C.    ☑ See patent family annex.

| | |
| --- | --- |
| *        Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **31 October 2022** | **15 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2022/037398**

| Patent document cited in search report | | | Publication date (day/month/year) | Patent family member(s) | | | Publication date (day/month/year) |
|---|---|---|---|---|---|---|---|
| WO | 2021/106714 | A1 | 03 June 2021 | TW | 202128885 | A | |
| WO | 2019/031288 | A1 | 14 February 2019 | US | 2020/0139641 | A1 | |
| | | | | whole document | | | |
| | | | | EP | 3666817 | A1 | |
| | | | | CN | 110785454 | A | |
| | | | | KR | 10-2020-0038920 | A | |
| | | | | TW | 201920429 | A | |

Form PCT/ISA/210 (patent family annex) (January 2015)

**EP 4 424 774 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013077238 A
- JP HEI10138379 A
- JP 2020049240 A
- JP 2020111677 A